# EUROPEAN PATENT APPLICATION

(11) **EP 2 455 659 A2**
(43) Date of publication of application: **23.05.2012**
(21) Application number: 11004828.7
(22) Date of filing: 14.06.2011
(51) Int. Cl.: F23G 5/027, F23G 5/44, F23J 15/02, F23J 15/04

(54) **Pyrolysis apparatus of waste material**

(30) Priority: 22.11.2010 KR 20100116340
(71) Applicant: T.H. Elema Eng Co., Ltd, Kyunggi-do, 429-849 (KR)
(72) Inventor: Kim, Eun-Ho, Bucheon-si Gyeonggi-do, 420-022 (KR)
(74) Representative: Lusuardi, Werther

(57) **Abstract**

Disclosed is a pyrolysis apparatus of a waste material. The pyrolysis apparatus includes a pyrolysis furnace (1) thermally decomposing an introduced waste material by using air, an upper gate (16) installed at an upper portion of the pyrolysis furnace such that the upper gate is open or closed, and closed after the waste material has been introduced; a lower gate (18) installed below the upper gate such that the lower gate is open or closed, a main valve connected with the exhaust pipe (32) and installed in a main pipe (20) communicating with an inner part of the pyrolysis furnace, a sub-valve connected with the exhaust pipe (32) and installed in a sub-pipe (24) communicating with the inner part of the pyrolysis furnace, and a gas purifying unit (34) receiving gas exhausted from the pyrolysis furnace, aerating the gas into water, and purifying the gas through a filter.

## Description

### [Technical Field]

The present invention relates to a pyrolysis apparatus. More particularly, the present invention relates to a pyrolysis apparatus capable of thermally decomposing various waste materials while restricting the concentration of dioxin or air pollutants to an environmental regulation value or less.

### [Background Art]

Most people like pleasant environment. A variety of waste materials include daily wastes to pollute environment. In order to properly dispose the waste materials, various ideas and devices have been developed. The waste materials may be buried in a landfill or burned in a crematory.

Among incinerators according to the related art, "movable incinerator" has been disclosed in Korean Unexamined Patent No. 1019980084726 in which the incinerator includes a combustion container body A including a vertical steel cylinder equipped with a nozzle and a furnace wall formed with an insulating material and a movable mounting plate B coupled with the combustion container body A. A plurality of combustion air entrance sections 3 having first to third air spray nozzles are arranged at a predetermined interval at the lower end of the vertical steel cylinder. The first air spray nozzle makes contact with the inner wall of the lower end of the cylindrical container while being mounted around the inner wall and communicates with an air introducing passage having a plurality of pores, and the second spray nozzle is provided at the central portion through a radiation pipe, which is provided at the lower portion thereof with pores and made of a heat-resistance filler material, and communicates with an air supply container made of a heat-resistance filler material and having pores at the lower portion thereof. The third air spray nozzle communicates with a primitive duct made of heat-resistance filler material and having pores at the lower portion, thereby forming a rostol. A combustion air exhaust tube is installed in a cylindrical container. The combustion air exhaust tube is provided on a main wall thereof with pores and an outer container is put around the combustion air exhaust tube, so that secondary combustion air is introduced. Two semi-circular open/close plates and facing each other on a rectangular frame having wheels are provided at the lower portion of the combustion container body A, thereby forming a remaining lime exhaust device manipulated by support levers and release levers. The movable mounting table includes a typical remaining lime collecting plate provided directly under the remaining lime exhaust device.

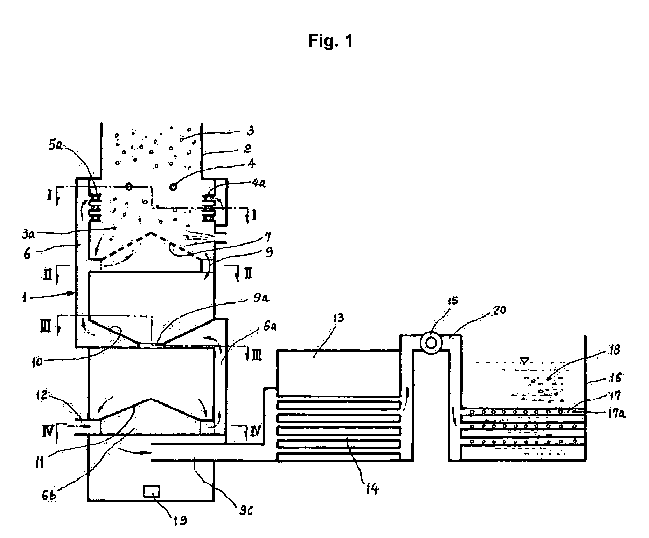

In addition, Korean Unexamined Patent No. 1020000060381 discloses an incineration apparatus for a combustible rubbish". According to the above patent application, combustion air is directly heated in an incinerator and supplied in an incinerator. A combustion flame is diffused and collected repeatedly, so that the combustion flame is smoothly mixed with combustion air. Accordingly, perfect combustion can be achieved. The exhaust gas is exhausted through a dust collector under water, so that smoke, carbon, and toxic gas of the combustion gas are dissolved in water and discharged in the pollution-free state. In detail, as shown in FIG. 1, a combustion material and flame diffusing plate, which has a quadrilateral pyramid with a plurality of air spray holes, is provided at the upper portion of the incinerator. Combustion material and smoke guiding holes are provided around the combustion material and flame diffusing plate. An air guiding passage formed around the incinerator communicates with an air guiding pipe, which has the air spray holes formed in left, right, front, and rear directions and is provided in a longitudinal direction, a short air guiding pipe, and the lower portion of the combustion material and flame diffusing plate. An ignition member is provided at one side of the incinerator.

When waste materials are incinerated, problems to be solved in terms of the protection of the environment occurs in relate to the disposing of a dioxin material and air pollutants.

The dioxin-based materials include many isomers. The isomers are classified according to the substitution number of polychlorinated dibenzo-p-dioxins (PCDD), poly chlorinated dibenzo furan (PCDF), and chlorine (Cl). According to the thermal decomposition mechanism of the dioxin-based material in a pyrolysis furnace, an immature organic material of the waste materials according to the thermal decomposition or an imperfect thermal decomposition is generated from the surface of a fly ash due to the catalytic action of copper chloride. Polycyclic Aromatic Hydrocarbons (PAHs), such as mothballs, anthracene, chrysene, pirene, or phenanthrene, generated from thermal decomposition is decomposed through the catalytic action, or combustible gas generated due to the thermal decomposition reacts with Cl due to the catalytic action to form a precursor of chlorophenol (C6H3CL30). The chlorophenol (C6H3CL30) is subject to a condensation reaction to generate a dioxin-based material such as PCDD.

In the pyrolysis furnace according to the related art, gas leaks to the outside through an introduction port of the waste materials, so that a work environment is deteriorated. In addition, regarding the conventional introduction port, a person manually opens a door of the introduction port, so that workability is degraded. When discharging gas, which is thermally decomposed, carbon monoxide is excessively discharged through the outlet. In addition, if the pressure is increased in the pyrolysis furnace, gas may flow back.

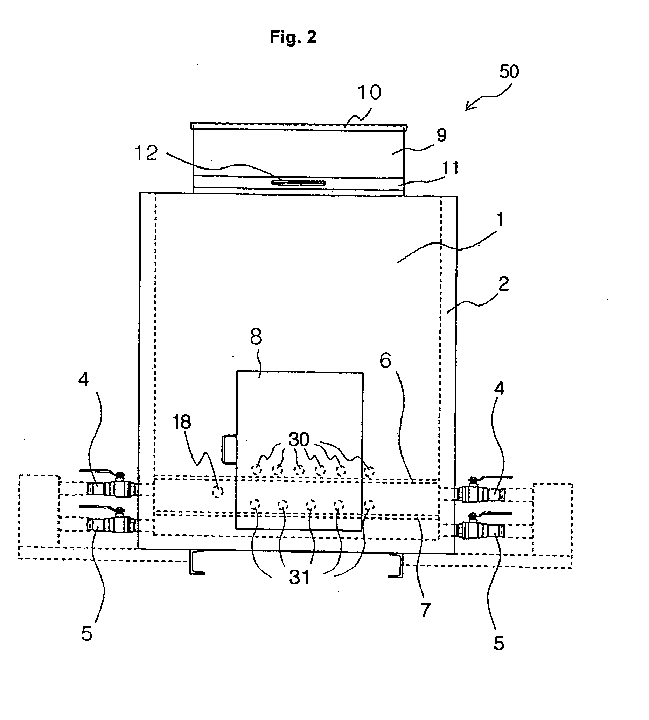

In order to solve the above problem, a pyrolysis furnace is disclosed in Korean Unexamined Patent No. 10-2008-0042579. As shown in FIG. 2, the above invention is suggested to prevent dioxin or bad smell while effectively performing thermal decomposition of various waste materials at the temperature of 300 °C or less. Accordingly, the recombination of dioxin can be prevented. As shown in FIG. 2, the pyrolysis furnace includes a pyrolysis section, which thermally decomposes waste materials introduced from a space isolated from an external space by the insulating bricks to exhaust gas, and bubbling vessels to aerate the gas exhausted from the pyrolysis section into vapor, so that toxic materials are absorbed into water. In detail, the pyrolysis furnace includes the pyrolysis section, which is made of insulating bricks and isolated from the external space, air inlet ports, which are provided at the wall of the pyrolysis section to allow air to be naturally input into the pyrolysis section, an air restriction unit, which restricts an inflow amount of air by fastening the air inlet ports, pairs of magnets, which form a magnetic field on an air passage to guide air to the pyrolysis section from the air inlet ports to magnetism-treat the thermal decomposition air, waste material supports supporting waste materials through a gate having the form of a shelf in a heat-resistance vessel, a gas exhaust hole provided on the wall of the pyrolysis section, a toxic material removing unit, which aerates the exhaust gas discharged from the gas exhaust hole in the water vessel to remove the toxicity of the exhaust gas, a catalysis system 19 for absorbing dioxin-based materials or flons of the exhaust gas which are difficult to be decomposed, and an exhaust unit to exhaust gas into air by using a fan.

In the pyrolysis furnace according to the related art, gas leaks to the outside through an introduction port of the waste materials, so that a work environment may be deteriorated. In addition, a person manually opens a door of an introduction port according to the related art, so that workability is degraded.

When discharging gas, which is thermally decomposed, carbon monoxide is excessively discharged through the outlet.

In addition, if the pressure is increased in the pyrolysis furnace, gas may flow back.

When the gas, which is subject to thermal decomposition, is aerated into the water, tar is generated, so that the bubbling vessel cannot smoothly operate.

### [Disclosure]

### [Technical Problem]

An object of the present invention is to allow waste materials to be more easily introduced into a pyrolysis furnace and prevent gas from leaking to the outside through an introduction port.

Another object of the present invention is to continuously introduce waste materials while stably maintaining a thermal decomposition environment in the pyrolysis furnace.

Still another object of the present invention is to reduce the contamination level of gas generated after thermal decomposition has been performed.

Still yet another object of the present invention is to prevent gas from flowing back when thermally decomposing waste materials.

### [Technical Solution]

In order to accomplish the objects of the present invention, there is provided a pyrolysis apparatus of a waste material including a pyrolysis furnace thermally decomposing fuel supplied in the pyrolysis furnace and an introduced waste material by using air introduced through an air inlet port to exhaust gas, an upper gate installed at an upper portion of the pyrolysis furnace such that the upper gate is open or closed, and closed after the waste material has been introduced, a lower gate installed below the upper gate such that the lower gate is open or closed, defining a storage space together between the lower gate and the upper gate, and introducing a waste material stored in the storage space into the pyrolysis furnace, and a gas purifying unit receiving gas exhausted from the pyrolysis furnace, aerating the gas into water so that a toxic material of the gas is adsorbed onto the water, and purifying the gas through a filter.

The upper gate of the pyrolysis furnace is provided at an upper end thereof with a waste material introduction port having a cover that is open or closed.

The upper and lower gates are automatically controlled to be open or closed with a predetermined time difference, and operated by a cylinder.

In another aspect, there is provided a pyrolysis apparatus of a waste material including a pyrolysis furnace thermally decomposing a waste material introduced into an inner space of the pyrolysis furnace by using air introduced through an air inlet port to exhaust gas into an exhaust pipe, a main valve connected with the exhaust pipe, installed in a main pipe communicating with an inner part of the pyrolysis furnace, and turned on in thermal decomposition of the waste material to properly adjust an internal pressure of the pyrolysis furnace, a sub-valve connected with the exhaust pipe, installed in a sub-pipe communicating with the inner part of the pyrolysis furnace, and turned on if the internal pressure of the pyrolysis furnace exceeds a preset pressure to exhaust gas, and a gas purifying unit receiving gas exhausted from the pyrolysis furnace, aerating the gas into water so that a toxic material of the gas is adsorbed onto the water, and purifying the gas through a filter.

The pyrolysis apparatus further includes a gas removing valve connected with the exhaust pipe, and installed in a gas removing pipe communicating with the storage space to exhaust gas remaining in the storage space.

The pyrolysis apparatus further includes an exhaust pump serving as a power source to exhaust gas from the pyrolysis furnace and the storage space. The exhaust pump operates at an RPM higher than a normal RPM to exhaust the gas when the sub-valve or the gas removing valve is open.

The pyrolysis apparatus further includes an exhaust pipe to exhaust gas discharged from a bubbling vessel, a carbon monoxide reduction unit to make a carbon monoxide component of introduced gas react with catalysis and change the carbon monoxide into carbon dioxide, in order to make gas discharged from the bubbling vessel react with the catalysis to lower the concentration of the gas, so that the gas having a lowered concentration is exhausted through the exhaust pipe, and a heater to heat the gas making contact with the catalysis at a proper temperature so that the gas reacts with the catalysis.

The pyrolysis apparatus further includes magnets provided in an inlet port to supply air into the pyrolysis furnace.

### [Advantageous Effects]

As described above, according to the present invention, upper and lower gates are installed in double at the waste material introduction portion used to introduce waste materials. The lower gate is open in a state that the upper gate is closed. Accordingly, the gas remaining between the upper and lower gates does not leak to the outside, so that a work environment can be improved. Since the gates are operated by cylinders, the workability can be improved.

According to the present invention, the exhaust pipe is installed at the exhaust port, and carbon monoxide of the gas is changed into carbon dioxide. Accordingly, the concentration of exhausted gas can be lowered.

According to the present invention, if the internal pressure of the pyrolysis furnace is increased, gas can be effectively exhausted by the sub-valve. Accordingly, the gas can be prevented from flowing back, and the thermal decomposition of the waste materials can be stably performed.

According to the present invention, the tar element prevents the operating efficiency from being lowered due to the storage of tar components and easily performs maintenance. The drain exhaust unit is installed and simply manipulated, so that drains can be easily exhausted. The heater and the carbon monoxide reduction unit are separately installed, so that the maintenance time can be increased. Toxic exhaust gas can be prevented, and the operating maintenance cost can be saved.

### [Description of Drawings]

FIG. 1 is an apparatus for incinerating a flammable waste material according to the related art;
FIG. 2 is a view showing a pyrolysis furnace according to the related art;
FIG.3 is a view showing the structure of a pyrolysis apparatus according to a first embodiment of the present invention, in which a vertical plane of the pyrolysis apparatus matches with the ground;
FIG. 4 is a view showing the structure of a waste material introduction port of the pyrolysis apparatus according to the first embodiment of the present invention; and

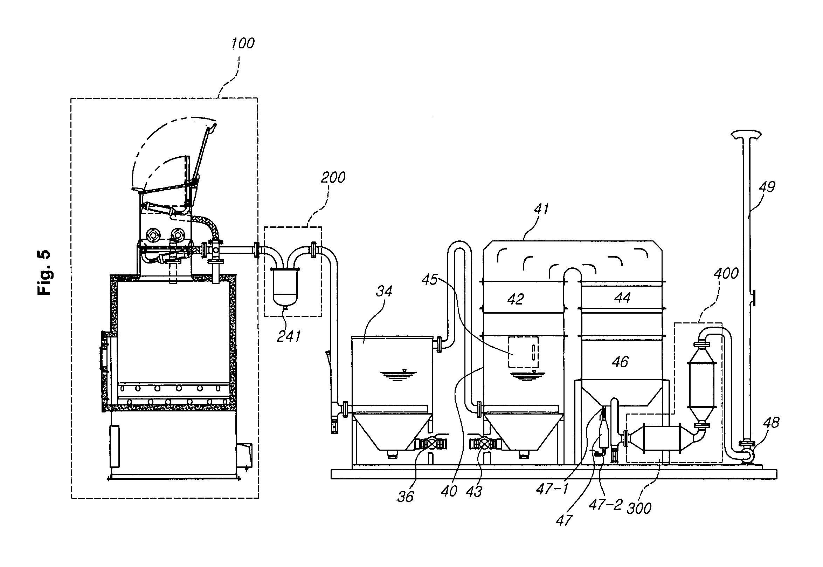

FIG. 5 is view showing the structure of a pyrolysis apparatus according to a second embodiment of the present invention.
FIG. 6 is a view showing the sectional surface of the tar element according to an exemplary embodiment of the present invention.

### [Best Mode]

### [Mode for Invention]

Hereinafter, a pyrolysis apparatus according to an exemplary embodiment of the present invention will be described with reference to accompanying drawings.

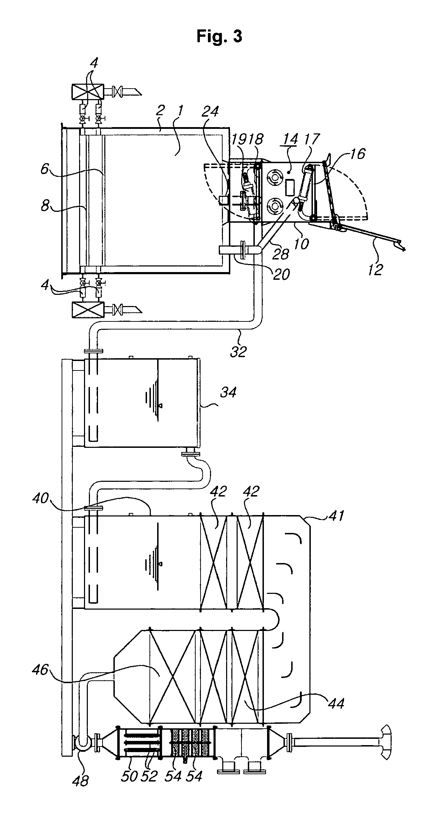

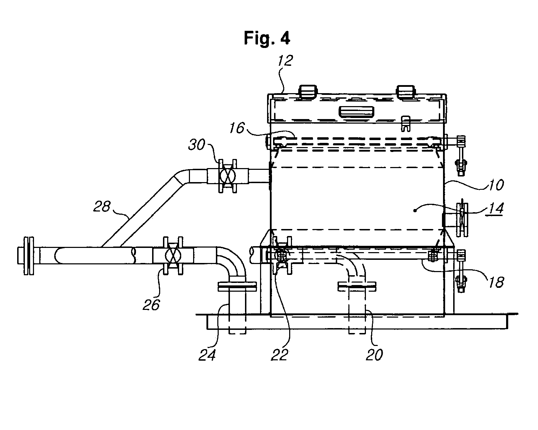

FIG.3 is a view showing the structure of a pyrolysis apparatus according to a first embodiment of the present invention, and FIG. 4 is a view showing the structure of a waste material introduction port of the pyrolysis apparatus according to the first embodiment of the present invention.

As shown in FIGS. 3 and 4, the pyrolysis apparatus according to the present invention includes a pyrolysis furnace 1. The pyrolysis furnace 1 is disclosed in Korean

Patent Application No. 10-2008-0042579 by applicant of the present application in which various waste materials can be thermally decomposed under a temperature of about 300°C while dioxin or bad smell is being prevented.

The pyrolysis furnace 1 is a place in which waste materials are actually decomposed through heating, and surrounded by refractory bricks 2. The refractory bricks 2 have a cylindrical shape and form a closed region to surround the pyrolysis furnace 1 to actually isolate the pyrolysis furnace 1 from an external space.

Since the lateral surface and the bottom surface of the pyrolysis furnace 1 make contact to a thermal decomposition reaction region according to the entrance state of waste materials, a high temperature exceeding a thermal decomposition temperature may locally occur. Accordingly, the lateral surface and the bottom surface of the pyrolysis furnace may be constructed by using the refractory bricks 2. However, since the upper portion of the pyrolysis furnace 1 makes contact with only gas after reaction, even a local region of the upper portion of the pyrolysis furnace 1 is not exposed to an abnormal temperature. Accordingly, the refractory bricks 2 may not be provided in the upper portion of the pyrolysis furnace 1. However, a protection member against the high temperature may be installed in the upper portion of the pyrolysis furnace 1 according to the installation places for the purpose of safety.

Meanwhile, air inlet ports 4 and 5 (see FIG. 2) are provided in the lower portion of the pyrolysis furnace 1 to supply air for thermal decomposition to the pyrolysis furnace 1. The air inlet port is provided in such a manner that a plurality of valves surround the edges of the pyrolysis furnace 1. An air passage of the air inlet port is provided therein with a magnet to form a magnetic field. Two or four magnets are attached onto inner walls of the air passage to apply a magnetic field to air passing through the air passage. In this case, north poles of the magnets may face each other, or north and south poles of the magnets may face each other. In addition, the north and south poles of the magnets may be offset from each other. When air is introduced in a state that the magnet field is applied to the air, fire is not distinguished even in low-temperature thermal decomposition. However, if air without the magnetic field is introduced, fir may be distinguished in the low-temperature thermal decomposition. Accordingly, applying a magnetic field to the air passage of the air inlet port is very important.

The pyrolysis furnace 1 is provided therein with an upper waste material support 6 and a lower waste material support 8. Waste materials introduced into the pyrolysis furnace 1 are supported by the upper and lower waste material supports 6 and 8. The upper and lower waste material supports 6 and 8 are provided therein with a heat transfer module (not shown) such as charcoal to supply heat required to thermal decomposition of the waste materials. Although not shown, other details of the pyrolysis furnace 1 are disclosed in Korean Patent Application No. 10-2008-0042579.

A waste material introduction port 10 is provided at an open upper portion of the pyrolysis furnace 1. The waste material introduction port 10 has a width and a height smaller than those of the pyrolysis furnace 1. The waste material introduction port 10 protrudes from the pyrolysis furnace 1 and is installed at a predetermined height. The waste material introduction port 10 is a place in which waste materials are primary stored before the waste materials are put into the pyrolysis furnace 1.

The waste material introduction port 10 is open or closed by a cover 12. The cover 12 is rotatably mounted on an upper end of the waste material introduction port 10 to open or close the waste material introduction port 10.

In addition, the waste material introduction port 10 is provided therein with a storage space 14 in which waste materials are primarily stored. The storage space 14 is provided at upper and lower portions thereof with rotatable upper and lower gates 16 and 18, respectively. The upper and lower gates 16 and 18 rotate by upper and lower cylinders 17 and 19 installed in the lateral surfaces of the waste material introduction port 10. As shown in FIG. 3, the upper gate 16 is rotatable upward, and the lower gate 18 is rotatable downward.

According to the present invention, gates are installed in double at the waste material introduction port 10, so that gas generated from waste materials is prevented from leaking to the outside. In detail, the gates 16 and 18 are not simultaneously open, but open with a predetermined time difference through an additional program.

In addition, since the double gates are installed at the waste material introduction port 10, the thermal decomposition environment of the pyrolysis furnace 1 can be stably maintained, so that waste materials can be continuously introduced.

In detail, when a worker presses a start button in the open state of the cover 12, the upper gate 16 is open, so that the waste materials can be introduced. Then, after 10 seconds elapse, the upper gate 16 may be automatically closed, or may be manually closed. If a predetermined time elapses after the upper gate 16 is closed, the lower gate 18 is open so that the waste materials can be introduced into the pyrolysis furnace 1. The automatic operation is controlled by a controller. The controller may include a typical electronic controller to receive signals from a sensor to control operating devices. The controller is not shown in the accompanying drawings in order to avoid the complexity of the drawings.

The gas generated from the waste materials are blocked by the upper and lower gates 16 and 19 so that the gas leakage can be minimized, and external air is not introduced into the pyrolysis furnace 1. In addition, only if the worker presses the start button, the above procedure is achieved, so that the thermal decomposition work can be simplified.

In addition, after the waste materials are introduced into the pyrolysis furnace 1, gas remaining in the storage space 14 in the closed state of the lower gate 18 is discharged to the outside by a gas removing valve 30 to be described below.

As described above, since the upper and lower gates 16 and 18 are open or closed with a predetermined time difference, the waste materials can be continuously decomposed. In detail, conventionally, after the waste materials have been completely decomposed, the cover 12 must be open and waste materials must be introduced and thermally decomposed. However, according to the present invention, the upper gate 16 can be open so that new waste materials can be introduced during the thermal decomposition of existing waste materials. In addition, during the thermal decomposition of the waste materials, the lower gate 18 can open and waste materials can additionally introduced. Accordingly, thermal decomposition can be continuously achieved.

A main pipe 20 is installed in the pyrolysis furnace 1 to communicate with an outside. The main pipe 20 communicates with the internal part of the pyrolysis furnace 1 to properly adjust the pressure of the pyrolysis furnace 1. Gas exhausted through the main pipe 20 is adjusted by a main valve 22. The main valve 22 is controlled to be always turned on if the pyrolysis apparatus is turned on, and to be closed if the pyrolysis apparatus is turned off. Therefore, according to the present invention, when the pyrolysis apparatus is in the turn-on state, the gas of the pyrolysis furnace 1 is exhausted through the main pipe 20 so that the pressure can be properly maintained.

For reference, the pressure of the pyrolysis furnace 1 is measured by an external differential pressure gauge.

The pyrolysis furnace 1 is provided therein with a sub-pipe 24 as well as the main pipe 20 for the purpose of the communication with the outside. Gas exhausted through the sub-pipe 24 is adjusted by a sub-valve 26. The sub-valve 26 exhausts gas through the sub-pipe 24 when the internal pressure of the pyrolysis furnace 1 is higher than a present pressure value, so that the gas cannot be exhausted only through the main pipe 20. In other words, the main valve 22 is always maintained in an open state, and the sub-valve 26 may be open or closed according to the internal pressure of the pyrolysis furnace 1.

Meanwhile, gas remaining in the storage space 14 of the waste material introduction port 10 is exhausted through a gas removing pipe 28. The gas exhausted through the gas removing pipe 28 is adjusted by a gas removing valve 30. In other words, gas remaining between the upper and lower gates 16 and 18 when the waste material is introduced is removed through the gas removing pipe 28 by turning on the gas removing valve 30.

The main pipe 20, the sub-pipe 24, and the gas removing pipe 28 are combined with each other in an exhaust pipe 32. The exhaust pipe 32 allows gases exhausted through the pipes 20, 24, and 28 to meet with each other and transfers the gases to bubbling vessels 34 and 40.

The bubbling vessels 34 and 40 make bubbles from introduced gas and exhaust the bubbles upward. Water contained in the bubbling vessels 34 and 40 is maintained at a level higher than an outlet of the exhaust pipe 32. The water contained in the bubbling vessels 34 and 40 may include chemicals such as calcium hydroxide solution or sodium hydroxide, alkalescent synthetic detergent, and a defoamer according to the neutralization action of gas. If gas is aerated into the bubbling vessels 34 and 40, toxic materials such as dioxin-based materials, tar-components, halogen-based components such as chloride or fluoride, or pyroligneous liquor are neutralized.

The bubbling vessel 40 is provided at the upper end thereof with a smoke passage 41 having a U shape. The contaminants of gas introduced into the bubbling vessel 40 are adsorbed by adsorbents 42 while passing through the water. The adsorbents 42 can lower the toxicity of chlorinated organic compounds, such as dioxin-based materials or PCB-based materials, representing high toxicity, or chlorinated organic compounds such as chlorobenzene-based materials serving as precursors of the above toxic compounds. The adsorbents 42 may include inorganic adsorbents such as zeolite, silica, or alumina as well as carbon adsorbents such as activated carbon or a coking coal. In addition, the toxin of gas subject to absorbents 44 is removed when the gas passes through a filter provided in the bubbling vessel 40.

The bubbling vessels 34 and 40, the smoke passage 41, the adsorbents 42, the absorbents 44, and the filter 46 purify gas, which are referred to as a gas purifying device.

The gas subject to the bubbling vessels 40 passes through an exhaust pump 48. The exhaust pump 48 supplies power so that gas filled in the pyrolysis furnace 1 and the storage space 14 can be exhausted. If the gas filled in the pyrolysis furnace 1 has a pressure greater than a predetermined pressure, the sub-valve 26 is turned on, so that the exhaust pump 48 operates at above a normal RPM for a predetermined time (e.g., 40 seconds) to exhaust gas. In addition, the exhaust pump 48 operates at a high RPM when exhausting gas remaining in the storage space 14.

The gas, which has passed through the exhaust pump 48, is introduced into an exhaust pipe 50. The exhaust pipe 50 is provided therein with a heater 52 and a carbon monoxide reduction device 54. The heater 52 heats gas at a predetermined temperature to minimize the moisture of the gas, so that the gas has a state to smoothly react with a catalyst.

The carbon monoxide reduction device 54 accelerates the reaction with the gas to reduce the concentration of gas. In other words, the carbon monoxide reduction device 54 reacts with carbon monoxide mainly constituting exhaust gas to make carbon dioxide, so that the concentration of the gas can be minimized. Since the carbon monoxide reduction device 54 reacts with gas purified through the adsorbents 42, absorbents 44, and the filter 46, a smaller amount of catalyst can be required, and the life span of the catalyst can be increased.

Hereinafter, the process of thermally decomposing waste materials and the process of exhausting gas generated in the thermal decomposition process in the pyrolysis apparatus according to the present invention will be described.

Before the waste materials are introduced, power is supplied to devices for the purpose of operation, and the pyrolysis furnace has been prepared.

A worker presses an external start button (not shown) in the state that the cover 12 is open. Then, the upper gate 16 is open and the waste materials are introduced. The upper gate 16 is manually open or closed after a predetermined time elapses. The lower gate 18 is open in a state that the upper gate 16 is closed. Next, after the waste materials are dropped into the pyrolysis furnace 1, the lower gate 18 is closed again. The automatic operations of the gates 16 and 18 are simply started or terminated through the pressing operation for the start button of the worker.

Gas remaining in the storage space 14 between the upper and lower gates 16 and 18 is exhausted through the gas removing pipe 28. In other words, the gas removing valve 30 is open, and the exhaust pump 48 effectively exhausts gas by operating at above a normal RPM. In this case, the main valve 22 and the sub-valve 26 are in the closed state. The gas removing valve 30 is in an open state for a predetermined time, for example, about 40 seconds, and closed again. The waste materials are thermally decomposed in the pyrolysis furnace 1.

The main valve 22 is open during the thermal decomposition of the waste materials, and the exhaust pump 48 operates at a normal RPM, so that the gas of the pyrolysis furnace 1 can be maintained at a proper pressure.

When the waste materials are thermally decomposed through the above procedure, the gas filled in the pyrolysis furnace 1 may have a pressure exceeding a preset pressure value. If the pressure of the gas exceeds the preset pressure value, the gas may flow back. Accordingly, the gas must be exhausted to the outside. The internal pressure of the pyrolysis furnace 1 can be checked by an external difference pressure gauge.

If the internal pressure of the pyrolysis furnace 1 exceeds a predetermined pressure value, the sub-valve 26 is open. Simultaneously, the exhaust pump 48 operates at above a normal RPM. The gas is exhausted through the main pipe 20 and the sub-pipe 24 by the power of the exhaust pump 48. For reference, the gas removing valve 30 is not open, but maintained in a closed state.

The gases exhausted through the main pipe 20 and the sub-pipe 24 meet with each other in the exhaust pipe 32 and are introduced to the bubbling vessels 34 and 40. The gas introduced into the bubbling vessels 34 and 40 are aerated into water of the bubbling vessels 34 and 40, that is, water including alkalescent synthetic detergent, a defoamer, calcium hydroxide solution, sodium hydroxide, or other chemicals. In this aeration procedure, toxic materials such as dioxin-based materials, tar-components, halogen-based components such as chloride or fluoride, or pyroligneous liquor are neutralized.

In addition, gas (smoke), which has passed through the bubbling vessel 40, passes through the adsorbents 42, the absorbents 44, and the filter 46 along the smoke passage 41, so that environment stress materials such as heavy metal materials or dioxin-based materials are removed from the gas. Accordingly, the gas can be purified.

The gas, which has passed through the bubbling vessel 40 and the smoke passage 41, is introduced into the exhaust pipe 50 through the exhaust pump 48. The gas introduced into the exhaust pipe 50 is heated through the heater 52, so that the gas has a temperature to sufficiently react with catalysis. Then, the gas reacts with the catalysis, so that carbon monoxide is converted into carbon dioxide. Accordingly, the contaminants are completely removed from the gas, so that purified gas is exhausted to the outside.

According to a second embodiment of the present invention, a tar element 200 is added to the first embodiment of the present invention, and a heater 300 and a carbon monoxide reduction device 400 are separately installed in an exhaust pipe, so that a more safe operation can be performed.

The pyrolysis furnace 1 and the components 100 of the pyrolysis furnace 1 have features identical to those of the first embodiment of the present invention except that drain valves 36 and 43 are installed at the lower portion of the bubbling vessels 34 and 40 for the convenience of the clean, an observation window 45 is additionally installed on the bubbling vessel 40 so that the inner part of the bubbling vessel 40 can be observed, and a drain exhaust unit 47 is provided at the end portion of a reverse U shape smoke passage 41.

The drain exhaust unit 47 is connected to the end portion of the smoke passage through a valve 47-1 to collect drains, so that the collected drains can be exhausted to the outside through the valve 47-1. When the hot gas is aerated in a bubbling vessel, purified, and then exhausted upward, the hot gas obtains moisture, and is condensed on the outer wall of the smoke passage 41 having a temperature similar to an ambient temperature. Accordingly, the condensed water must be removed from the outer wall of the smoke passage 41 and exhausted. In this case, the drain exhaust unit 47 is required.

According to the first embodiment, the heater 52 and the carbon monoxide reduction unit 54 are installed in one vertical case. However, according to the present embodiment, the heater 300 is installed in an individual case having a longer length in the horizontal direction, and the carbon monoxide reduction unit 400 is installed in an individual case and arranged in a vertical direction. Then, the exhaust pump 48 is installed at the rear end of the carbon monoxide reduction unit 400. If the heater and the carbon monoxide reduction unit accommodated in one case according to the first embodiment are separated from each other, metallic components are oriented in the transverse direction when metallic catalysis is used so that the metallic components may drop onto the heater and make contact with a nichrome wire of the heater, thereby causing spots.

The heater adjusts the temperature of heated gas. In other words, the heater controls power through the detection of gas temperature at an output port of the carbon monoxide reduction unit, so that a proper temperature of the gas can be maintained. Since carbon monoxide is subject to exothermic reaction when the carbon monoxide is changed into carbon dioxide to increase a temperature, the temperature adjustment of the heater is required to maintain the proper temperature.

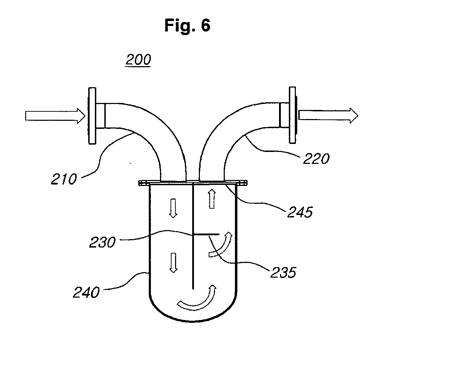

The tar element 200 may generally include a cyclone or a filter-type dust collector to collect dust of gas. The sectional surface of the tar element 200 according to an exemplary embodiment of the present invention is shown in FIG. 6.

The tar element 600 includes a partition plate 230, which has a sectional surface of "T" shape in a case 240 and is attached to a case cover 245, in order to guide the flow of air in the direction of arrows. The case 240 and the case cover 245 are coupled with each other in the form of a flange. Accordingly, the case 240 and the case cover 245 are separated from each other for the purpose of cleaning according to occasions. The exhaust pipe 32 of the pyrolysis furnace is connected to an inlet pipe 210 of the tar element 200, and an outlet pipe of the tar element 200 is connected to an inlet pipe of the bubbling vessel 34.

The gas flows in the direction of arrows within the tar element 200. However, when the gas collides with a partition plate so that the direction of gas flow is changed, tar particles are separated from the flow of the gas, so that the tar particles are piled on the tar element 200. If a horizontal blade 235 is attached to the partition plate, the tar particles may be piled more effectively. The piled tar particles and dusts are cleaned through the separate of the case 240 and the case cover 245.

Since the operation of the pyrolysis furnace according to the second embodiment is identical to the operation of the pyrolysis furnace according to the first embodiment, the details of the operation of the pyrolysis furnace according to the second embodiment are omitted. The exhaust of the piled tar or the manipulation of the drain exhaust unit 47 may be manually performed.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. A pyrolysis apparatus of a waste material comprising:
a pyrolysis furnace thermally decomposing fuel supplied in the pyrolysis furnace and an introduced waste material by using air introduced through an air inlet port to exhaust gas;
an upper gate installed at an upper portion of the pyrolysis furnace such that the upper gate is open or closed, and closed after the waste material has been introduced;
a lower gate installed below the upper gate such that the lower gate is open or
closed, defining a storage space together between the lower gate and the upper gate, and introducing a waste material stored in the storage space into the pyrolysis furnace; and
a gas purifying unit receiving gas exhausted from the pyrolysis furnace, aerating the gas into water so that a toxic material of the gas is adsorbed onto the water, and purifying the gas through a filter.

2. The pyrolysis apparatus of claim 1, wherein the upper gate of the pyrolysis furnace is provided at an upper end thereof with a waste material introduction port having a cover that is open or closed.

3. The pyrolysis apparatus of claim 2, wherein the upper and lower gates are automatically controlled to be open or closed with a predetermined time difference, and operated by a cylinder.

4. A pyrolysis apparatus of a waste material comprising:
a pyrolysis furnace thermally decomposing a waste material introduced into an inner space of the pyrolysis furnace by using air introduced through an air inlet port to exhaust gas into an exhaust pipe;
a main valve connected with the exhaust pipe, installed in a main pipe communicating with an inner part of the pyrolysis furnace, and turned on in thermal decomposition of the waste material to properly adjust an internal pressure of the pyrolysis furnace;
a sub-valve connected with the exhaust pipe, installed in a sub-pipe communicating with the inner part of the pyrolysis furnace, and turned on if the internal pressure of the pyrolysis furnace exceeds a preset pressure to exhaust gas; and
a gas purifying unit receiving gas exhausted from the pyrolysis furnace, aerating the gas into water so that a toxic material of the gas is adsorbed onto the water, and purifying the gas through a filter.

5. The pyrolysis apparatus of claim 4, further comprising:
an upper gate installed at an upper portion of the pyrolysis furnace such that the upper gate is open or closed, and closed after the waste material has been introduced;
a lower gate installed below the upper gate such that the lower gate is open or
closed, defining a storage space together between the lower gate and the upper gate, and introducing a waste material stored in the storage space into the pyrolysis furnace; and
a gas removing valve connected with the exhaust pipe, and installed in a gas removing pipe communicating with the storage space to exhaust gas remaining in the storage space.

6. The pyrolysis apparatus of claim 5, further comprising an exhaust pump serving as a power source to exhaust gas from the pyrolysis furnace and the storage space, wherein the exhaust pump operates at an RPM higher than a normal RPM to exhaust the gas when the sub-valve or the gas removing valve is open.

7. The pyrolysis apparatus of one of claims 1 to 6, the gas purifying unit includes:
a bubbling vessel storing water therein and aerating the gas exhausted from the pyrolysis furnace into water so that toxic materials of the gas is adsorbed onto the water;
a gas passage exhausting the gas from the bubbling vessel;
an adsorbent provided in the gas passage to reduce the toxic materials of the gas;
an absorbent provided in the gas passage to reduce bad smell of the gas;
a filter section provided in the gas passage to reduce particles of the gas;
a carbon monoxide reduction unit provided in the gas passage to convert carbon monoxide into harmless gas; and
an exhaust pump provided in the gas passage to exhaust the gas to air.

8. The pyrolysis apparatus of one of claims 1 to 6, further comprising a magnet applying a magnetic field to air introduced into the pyrolysis furnace through the air inlet port.

9. The pyrolysis apparatus of one of claims 1 to 6, further comprising a drain exhaust unit provided at an end portion of a smoke passage.

10. The pyrolysis apparatus of claim 8, wherein the air inlet port is installed around a lower end of the pyrolysis furnace, the air inlet port is provided therein with magnets to form a magnetic field, and north poles of the magnets face each other, north and south poles of the magnets face each other, or the north and south poles of the magnets are offset from each other without facing each other.

11. The pyrolysis apparatus of one of claims 1 to 6, further comprising a tar element interposed between a gas outlet of the pyrolysis furnace and a front stage of the gas purifying unit to remove tar components from gas generated from the pyrolysis furnace.

12. The pyrolysis apparatus of one of claims 1 to 6, wherein the gas is aerated into water of a bubbling vessel including a chemical selected from the group consisting of calcium hydroxide solution, sodium hydroxide, alkalescent synthetic detergent, and a defoamer, so that a toxic material selected from the group consisting of dioxin-based materials, tar-components, halogen-based components including chloride or fluoride, and pyroligneous liquor is neutralized.
